# EUROPEAN PATENT APPLICATION

(11) **EP 3 361 801 A1**
(43) Date of publication of application: **15.08.2018**
(21) Application number: 16861619.1
(22) Date of filing: 04.11.2016
(51) Int. Cl.: H04W 72/04

(54) **DATA TRANSMISSION METHOD**

(30) Priority: 06.11.2015 CN 201510759706
(71) Applicant: MediaTek Singapore Pte. Ltd., Singapore 138628 (SG)
(72) Inventor: SUN, Feifei, Beijing 100088 (CN); ZHANG, Lei, Beijing 100088 (CN); WU, Min, Beijing 100029 (CN); CHEN, Po-Ying, Hsinchu City 300 (TW)
(74) Representative: Habermann, Hruschka & Schnabel
(86) International application number: PCT/CN2016/104668
(87) International publication number: WO 2017/076351

(57) **Abstract**

The present invention provides a data transmission method. The data transmission method comprises: generating a first frame structure by using a first subframe configuration in a wireless communication network by means of a base station; generating a second frame structure by using a second subframe configuration, the length of each subframe in the second subframe configuration being many times that of a subframe in the first subframe configuration; and sending an indication of the second subframe configuration to a plurality of user equipments, and sending and receiving signals to the plurality of user equipments by using the first frame structure and the second frame structure. The method provided in the present invention can support a TDD configuration in a new wireless system after a narrow band system, thereby providing system efficacy.

## Description

### Field of the Invention

The present invention relates to wireless communication and especially related to the frame structure and slot allocation of a Time-Division Duplexing (TDD) communication system.

### Description of the Related Art

With rapid developments being made in the cellular-mobile-communication industry, the fifth-generation (5G) mobile-communication system has been receiving more attention and has had more research conducted on it. Recently, 5G has been officially named IMT-2020 by ITU, and is expected to enter the commercial phase in 2020. Unlike traditional 2G / 3G / 4G mobile-cellular systems, 5G is not only designed for a human user, but it also supports various types of Machine Type Communication (MTC) users. Among business that service MTC terminals, one business is called Massive MTC (MMC). The main characteristics of an MTC terminal served by the aforementioned business are: (1) low cost (the cost of a terminal is much less than a smart phone); (2) a great amount (according to the requirements of the ITU for 5G, the MMC business will support 10⁶ connections per square kilometer); (3) low data rate requirements; and (4) a high tolerance for latency, etc.

In the Narrow Band Internet of Things (NB IoT) project which is a new project in the standardization phase of LTE Release 13, the bandwidth of the terminal RF is further reduced to 180KHz. In order to be successively deployed in various scenarios, the NB IoT project presents three deployment scenarios, which are the in-band deployment, guard band deployment, and stand-alone deployment. Since the bandwidth of the terminal RF is further reduced, the accuracy of the time-frequency synchronization is affected. For the purpose of guaranteeing the performance without having any additional overhead, a carrier which is smaller than the normal LTE-subcarrier spacing to the uplink design has been considered. A way of making the small subcarrier compatible with the LTE system, and especially compatible with TDD system, is an urgent problem that must be solved.

In view of the above description, embodiments of the present disclosure provide a method of generating a frame structure and provide the user equipment and base station corresponding to the method.

### BRIEF SUMMARY OF THE INVENTION

One embodiment of the present disclosure provides a data-transmission method, and the method comprises utilizing a first sub-frame configuration to generate a first frame structure by a base station in a wireless communication network; utilizing a second sub-frame configuration to generate a second frame structure, wherein the length of each sub-frame in the second sub-frame configuration is several times the length of a sub-frame in the first sub-frame configuration; transmitting an indication of the second sub-frame configuration to some user equipment; and transmitting and receiving a signal for some user equipment by using the first sub-frame structure and the second frame structure.

Another embodiment of the present disclosure provides a data-transmission method, and the method comprises receiving an induction of a second sub-frame configuration through user equipment in a wireless communication network, wherein the length of each sub-frame in the second sub-frame configuration is several times the length of a sub-frame in a first sub-frame configuration; utilizing the second sub-frame configuration to generate a second frame structure which is different from a sub-frame in the first sub-frame configuration; and transmitting and receiving a signal with a base station by using the second frame structure.

The present disclosure further provides a base station and user equipment which use the methods mentioned above.

By using the data-transmission method and the user equipment provided by the present disclosure, the base station can support TDD in the narrowband system and the new wireless system in the future, which improves system performance.

### BRIEF DESCRIPTION OF THE DRAWINGS

The present disclosure can be more fully understood by reading the subsequent detailed description and examples with references made to the accompanying drawings, and the same number in the drawings represents the similar components, wherein:
FIG. 1 is a block diagram of a wireless communication system according to one embodiment of the present disclosure.
FIG. 2 is a frame structure design and an UL-DL configuration of a LTE TDD system according to one embodiment of the present disclosure.
FIG. 3 is a first frame structure according to one embodiment of the present disclosure.
FIG. 4 is a design for a TDD system according to one embodiment of the present disclosure.
FIG. 5 is a design of a first set of special M sub-frames according to one embodiment of the present disclosure.
FIG. 6 is a corresponding relation diagram of the special sub-frame configuration of the legacy system and the new-design M special sub-frame according to one embodiment of the present disclosure.
FIG. 7 is a second design for the TDD system according to one embodiment of the present disclosure.
FIG. 8 is a third design for the TDD system according to one embodiment of the present disclosure.
FIG. 9 is a second frame structure according to one embodiment of the present disclosure.
FIG. 10 is a design of a second set of special M sub-frames according to one embodiment of the present disclosure.
FIG. 11 is a design of a third set of special M sub-frames according toone embodiment of the present disclosure.
FIG. 12 is a design of a fourth set of special M sub-frames according to one embodiment of the present disclosure.
FIG. 13 shows the correlation between a design of a fourth set of special M sub-frames and the legacy TDD downlink configuration according to one embodiment of the present disclosure.
FIG. 14 is a flow diagram illustrating how the network side generates the updated frame structure which is applied to different user equipments according to one embodiment of the present disclosure.
FIG. 15 is a flow diagram illustrating the method of receiving and transmitting a signal at the user side according to one embodiment of the present disclosure.
FIG. 16 is another flow diagram illustrating the method of receiving and transmitting a signal at the user side according to one embodiment of the present disclosure.

### DETAILED DESCRIPTION OF THE INVENTION

According to the accompanying drawings and the following description, the mentioned features and other features of the embodiments of the present disclosure are obvious. These embodiments are used for illustrating, and the present disclosure is not limited to these embodiments. In order to make those skilled in the art easily understand the principles and embodiments of the present disclosure, the embodiments of the present disclosure are described by taking LTE carrier and the Massive Machine Type Communication (MMC) carrier as examples. It should be understood that the embodiments of the present disclosure are not limited to the applications described above. For the operation mode determining other applications, the embodiments of the present disclosure are also applicable.

In the new project on the new Internet of Things (IoT) terminal in Release 13 of Long Term Evolution (LTE), the minimum RF bandwidth of IoT terminal may be 180KHz. One advantage of this evolution is that the cost of the RF can be further reduced. Another advantage is that such system bandwidth and transmission bandwidth options help to find more deployment spectrum for the IoT (e.g. MTC) applications. For example, GSM system will gradually be withdrawn from commercial operation in the near future. The 180KHz bandwidth is compatible with the legacy GSM system. Therefore, it is easy to deploy the MTC carrier supporting 180KHz bandwidth in the legacy GSM band during the process through which the GSM is gradually withdrawn. Such an MTC carrier is a separate MTC carrier which is transmitted or received on a separate carrier (also referred to as a spectrum or frequency band) as a stand-alone deployment. On the other hand, the actual transmission bandwidth in 180 kHz is consistent with the minimum transmission unit resource block (RB) of the LTE system, if an MTC carrier can be deployed in the LTE system and utilized to coexist with the original public/dedicated channel and signal of LTE system. Transmission or reception within another system band and within a range, which is less than another system bandwidth, is known as an in-band deployment. Furthermore, an MTC carrier supporting a bandwidth of the order of 180 kHz may also be deployed on the LTE system guard band. For example, the modulation and the numerology of LTE may be maintained, and the original LTE bandwidth may be extended to the guard band with one or more RB to be used as the MTC carrier. In another example, a new modulation (e.g., single carrier modulation) or a parameter that is different from the legacy LTE may be applied on the guard band to operate as the MTC carrier, such as a different subcarrier spacing, which makes its MASK meet the requirements of the protocol via filtering. The transmission or reception on the guard band of another system is called a guard-band deployment. These methods will provide greater flexibility for future MTC deployments and help the MTC industry develop well.

The present disclosure provides a frame structure design for an MTC carrier supporting 180 kHz bandwidth, especially for in-band and guard-band deployments and particularly for LTE time division duplex (TDD) systems, allowing narrowband systems to operate in the broadband system, which can provide MTC services on the LTE TDD carriers and contribute to the industrialization of IoT.

Furthermore, the future 5G communication system may be composed of a variety of transmission formats, and different frame structures may be designed to meet different needs. For example, a frame structure supports ultra-reliable requirements, a frame structure supports high-speed requirements (e.g., wide band LTE systems, millimeter-wave (mmWave or mmW) systems), a frame structure supports the ultra-low latency, and a frame structure supports massive IoT devices, and the like. Different frame structures can be compatible and can be deployed in the same frequency band; furthermore, different frame structures can be flexibly switched according to different demands. The method of the present disclosure is applicable to 5G communications, or can be utilized to solve the coexistence problems of 4G and 5G communication systems.

The above-mentioned applications are embodiments of the present disclosure, and the present disclosure is not limited thereto.

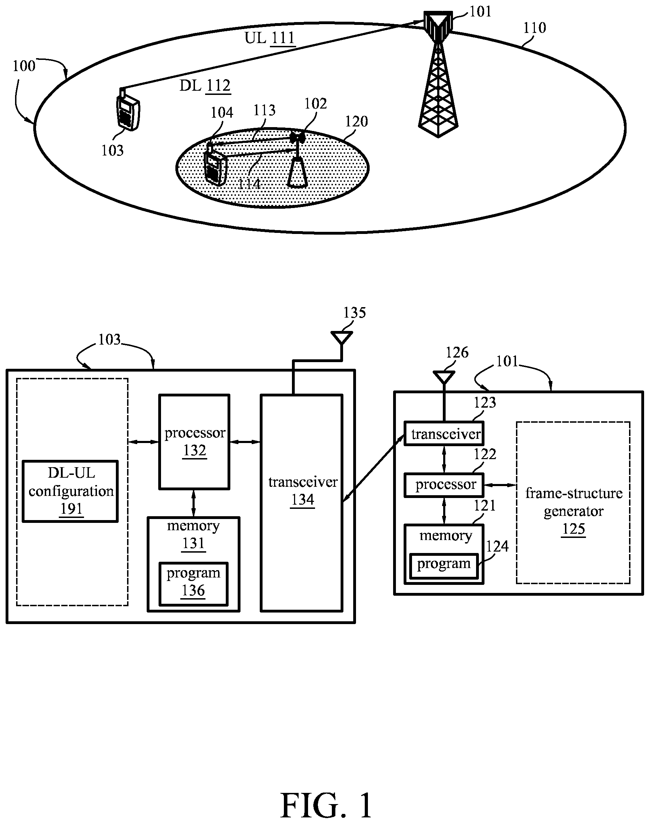

FIG. 1 is a schematic block diagram of a wireless communication system according to one embodiment of the present disclosure. The wireless communication system 100 includes one or more basic elements 101 and 102 that form one or more access networks 110 and 120 distributed within a geographic region. The access networks 120 and 110 may be Universal Terrestrial Radio Access Network (UTRAN) of WCDMA technology, or E-UTRAN of LTE / LTE-A technology, or GSM / GPRS technology. The basic elements may also be known as an access point, base station node B, evolved Node B (eNB), or other terms in the art. In some systems, one or more base stations are coupled to the controller to form an access network which is communicated with one or multiple core network.

As shown in FIG. 1, one or more user equipment (UE) 103 and 104 are wirelessly coupled to base stations 101 and 102 for operating in a service area (e.g., a wireless service is obtained within a cell or a cell sector.). A UE may be called user equipment (UE), a wireless communication device, a terminal, or other term. Although the UE 103 in FIG. 1 is illustrated as a hand-held terminal, the UE 103 is not limited to being a hand-held terminal. The UE 103 may be a non-handheld terminal, an IoT terminal, or a large-scale device. The UE 103 transmits UL data to the base station 101 by the UL channel 111 in the time and/or frequency domain. The UE 104 transmits UL data to the base station 102 by the UL channel 114 in the time and/or frequency domain. The base stations 101 and 102 transmit the DL signals to the UE 103 and 104 by the DL channels 112 and 113, respectively. In one embodiment, the system may utilize OFDMA technology or multicarrier technology on a DL communication, and the communication system may use a next-generation single-carrier (SC) technology based on OFDMA technology or FDMA architecture or another single-carrier technology on a UL communication, such as single-carrier technology based on GMSK modulation, and the like.

FIG. 1 further illustrates a simplified block diagram of the UE 103 and the base station 101 according to the described embodiment of the present invention. The base station 101 has an antenna 126 that transmits and receives wireless signals. An RF-transceiver module 123 coupled to the antenna receives an RF signal from the antenna 126, converts the RF signal into a baseband signal, and transmits the signal to the processor 122. The RF-transceiver module 123 also converts the baseband signal received from the processor 122 into an RF signal and sends the RF signal to the antenna 126. The processor 122 processes the received baseband signals and invokes different functional blocks to implement the functions of the base station 101. The memory 121 stores program instructions and data 124 to control the operation of the base station 101.

In accordance with one embodiment of the present disclosure, the base station 101 further comprises other functional modules for implementing embodiments of the present disclosure. For example, the base station 101 includes a frame-structure generator 125 for generating a first frame structure according to a set of parameters, wherein the first frame structure includes downlink sub-frame(s), uplink sub-frame(s), and special sub-frame(s). The frame-structure generator 125 further generates a second frame structure according to a second set of parameters, wherein at least one of the three kinds of sub-frames of the downlink sub-frame, the uplink sub-frame, and the special sub-frame in the second frame structure is different from a corresponding sub-frame in the first frame structure. The base station further utilizes the RF-transceiver module 123 to apply the first frame structure and the second frame structure to different users. Only some of the modules for implementing the embodiments of the present disclosure are mentioned above. The modules may be implemented by hardware, software, firmware, or a combination of any of the above, and the present disclosure is not limited thereto.

The UE 103 has an antenna 135 which transmits and receives wireless signals. An RF-transceiver module 134 coupled to the antenna, receives an RF signal from the antenna 135, converts the RF signal into a baseband signal, and transmits the signal to the processor 132. The RF-transceiver module 134 also converts the baseband signal received from the processor 132 into an RF signal, and sends the RF signal to the antenna 135. The processor 132 processes the received baseband signal and invokes the different functional modules to implement the functions in the UE 103. The memory 131 stores program instructions and data 134 to control the operation of the UE 103.

In accordance with one embodiment of the present disclosure, the UE 103 further comprises other functional modules for implementing embodiments of the present disclosure. The UE 103 utilizes the RF-transceiver module 134 to receive an indication of a first UL-DL configuration and an indication of a first special sub-frame configuration. The UE further comprises a DL-UL-configuration-detection-and-generation circuit 191 for generating a frame structure based on the indication of the first uplink-and-downlink configuration, the indication of the first special sub-frame configuration, the mapping relationship between the first uplink-and-downlink configuration and a second uplink-and-downlink configuration, and the mapping relationship between the first special sub-frame configuration and a second special sub-frame configuration. Embodiments of the new DL-UL configuration are further described in the following examples. Only a part of the modules for implementing the embodiments of the present disclosure are mentioned above. The modules may be implemented by hardware, software, firmware, or a combination of any of the above, and the present disclosure is not limited thereto.

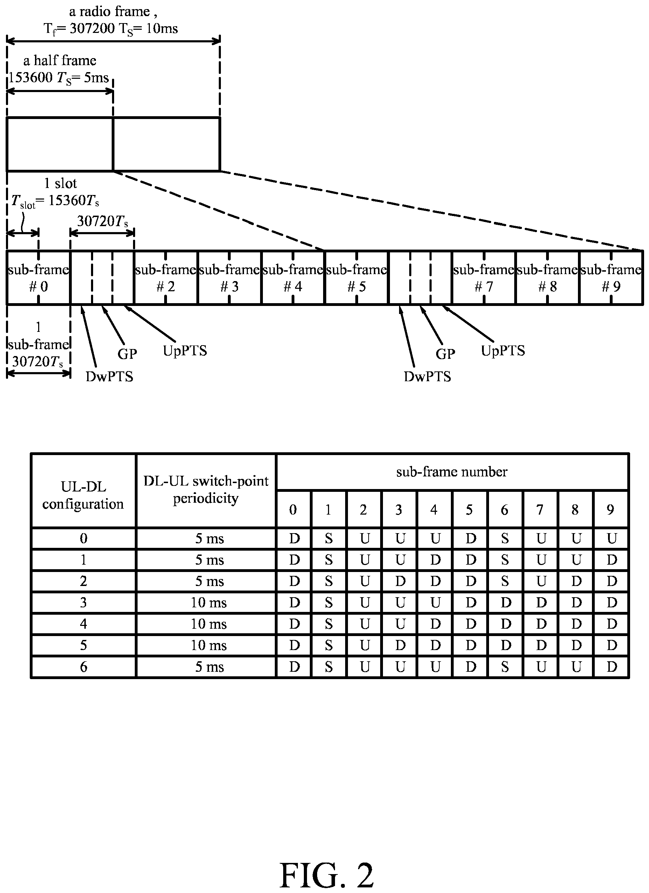

FIG. 2 shows the frame structure design and the UL-DL configuration in the LTE TDD system. As shown in FIG. 2, in the LTE system, the length of the radio frame of TDD and FDD system is 10ms. The radio frame includes 307200 samples (i.e., T*_{f}*= 307200 × T*ₛ* = 10ms). Each radio frame comprises two half frames whose length is 153600 × T*ₛ* = 5ms. Each half frame contains five sub-frames, and the length of each sub-frame is 30720 × T*ₛ* = 1ms. The UL-DL configurations supported by the present disclosure are listed in FIG. 2. Regarding each sub-frame of the wireless frame, "D" represents the sub-frame for DL transmission; "U" represents the sub-frame for UL transmission; and "S" represents the special sub-frame. The special sub-frame has three special slots, which are downlink-pilot-time slot (DwPTS), guard period (GP), and uplink-pilot-time Slot (UpPTS). FIG. 2 shows the length of DwPTS and UpPTS, which is in the condition that the total length of the DwPTS, GP and UpPTS is equal to 30720 × T*ₛ* = 1ms. Each sub-frame i is defined as comprising two time slots (i.e., 2i and 2i+1), and the length of one slot in each sub-frame is Tₛₗₒₜ = 15360 × T*ₛ* = 0.5ms. The UL-DL configuration, which has downlink-to-uplink switch-point periodicity with 5ms and 10ms, is supported in the legacy system. In the case of a 5ms DL-UL switch-point periodicity, each half frame has the special sub-frame, such as UL-DL configurations 0, 1, 2, and 6 in FIG. 2. In the case of a 10ms DL-UL switch-point periodicity, only the first half frame has the special sub-frame, such as UL-DL configurations 3, 4 and 5 in FIG. 2. Reserved sub-frame 0, sub-frame 5 and DwPTS are used for DL transmission. The UpPTS and the sub-frames after the special sub-frame are reserved for UL transmission, as shown in FIG. 2.

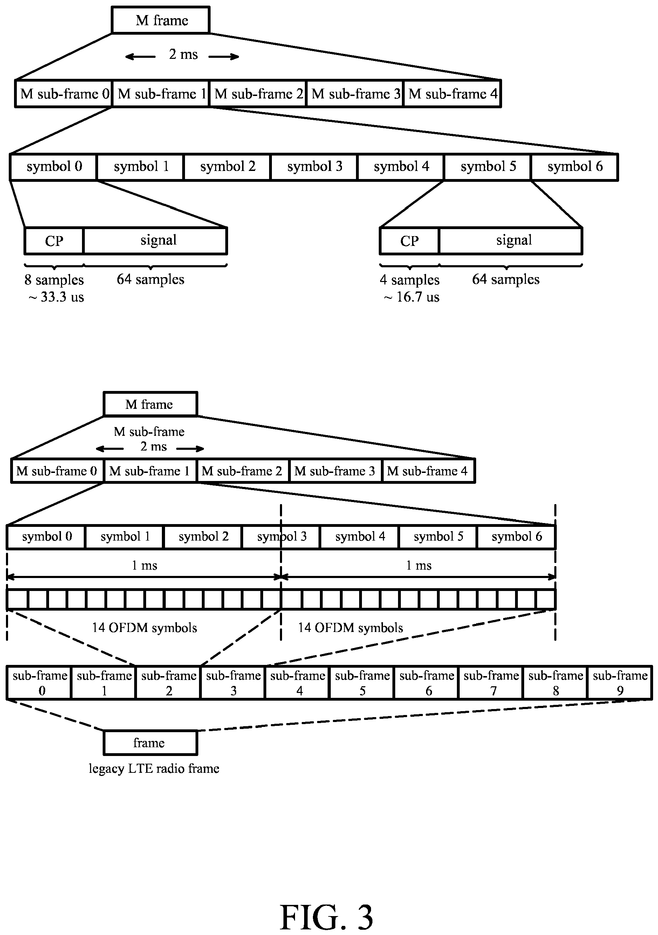

FIG. 3 is a first frame structure according to one embodiment of the present disclosure. The subcarrier spacing is 3.75 kHz. The 64-point Fast Fourier transform (FFT) is adopted. The number of available carriers is 48 (i.e., occupying a 180 kHz bandwidth). The sampling frequency is T_{Ms} = 64 x 3.75 kHz = 240 kHz. As shown in FIG. 3, the length of an MTC sub-frame or an M-sub-frame (hereinafter denoted as M sub-frame) is 2ms, and the M sub-frame includes 7 symbols. In one embodiment, the length of the cyclic prefix (CP) of the first symbol is equal to eight samples (i.e., about 33.3µs), and the length of the CP of each symbol of the last six symbols is equal to four samples (i.e., about 16.7µs). In order to obtain the same wireless-frame length as another system (such as 10ms), in the disclosed embodiment, an updated frame (denoted as an M frame) represents a frame used in an MTC UE or an IoT UE, and the M frame is composed of 5 M sub-frames. The representations of the M frame and the M sub-frame are used to describe the frame and sub-frame which are different from the frame and sub-frame of the legacy LTE system, and the present disclosure is not limited to the MTC UE. A system to which the M frame and the M sub-frame are applied is not limited to the MTC or IoT system. In another embodiment, an M frame may be designed to be longer so that the UE can read information only when the UE wakes up at the frame header of each M frame, to quickly know whether the M frame transmits the UE information. If there is no UE information, then the UE can enter the sleep state and achieve the effect of power saving. For example, one M frame is designed to be 80ms, 160ms, or even 320ms. Moreover, a superframe may be introduced. A superframe consists of a number of M frames. As described above, a superframe may be used to define the UE to read paging information. For example, a UE read the paging information only in the specific position within a superframe. If there is no paging information, then the sleep state is continued and the effect of power saving is achieved. In another embodiment, CP length for the first 4 symbols is 5 samples (i.e., about 20.83µs), and CP length for the remaining 3 symbols is 4 samples (i.e., about 16.7µs). In addition, the lower part of Figure 3 shows a comparison between the new designed frame structure and the frame structure of the legacy LTE system. An M sub-frame is 2ms and includes 7 symbols corresponding to two LTE sub-frames. A legacy LTE sub-frame contains 14 OFDM symbols per sub-frame for a normal CP, and the sub-frame contains 12 OFDM symbols for an extended CP. In other words, since the new frame structure design uses 2ms as a unit, a new design needs to be applied to the TDD system. It will be understood by those skilled in the art that the TDD configuration for designing a new system frame structure using 2ms as a unit is only one illustration. Without departing from the spirit of the present disclosure, the TDD configuration using the power of 2 as a unit may also be applied in accordance with the above principles.

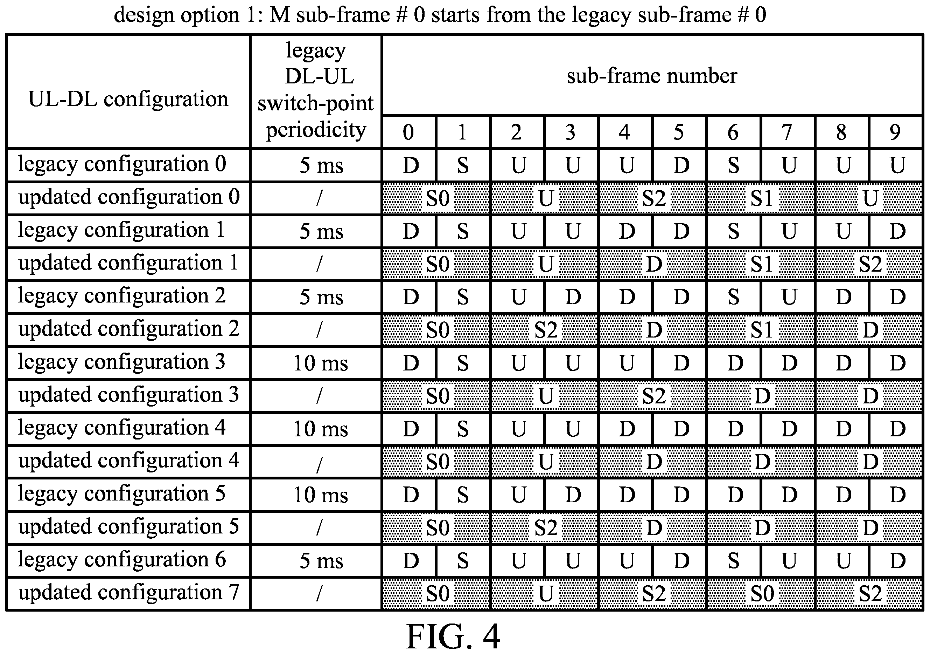

FIG. 4 is a schematic diagram of a first sub-frame configuration design applied to a TDD system according to one embodiment of the present disclosure. As shown in FIG. 4, M sub-frame # 0 starts from the legacy sub-frame # 0 of the legacy configuration: that is, M sub-frame # 0 is the legacy sub-frame # 0 and legacy sub-frame # 1, and M sub-frames # 1 corresponds to the legacy sub-frame # 2 and legacy sub-frame # 3. Similarly, M sub-frames # 2, # 3, and # 4 correspond to the legacy sub-frames # 4 and # 5, sub-frames # 6 and # 7, and sub-frames # 8 and # 9, respectively. In TDD system, the UL-DL configuration has multiple configurations, as shown in FIG. 2. For the in-band deployment, the directions of the uplink and downlink of the M sub-frame should be the same as the directions of the uplink and downlink of the legacy system. Therefore, if the directions of the uplink and downlink of the legacy sub-frame corresponding to an M sub-frame are changed or there is a special sub-frame, then the M sub-frame should also be a special sub-frame. In one embodiment, three special M sub-frame designs are required for the legacy 7 UL-DL configurations of the LTE TDD system. As shown in FIG. 4, in design option 1, the sub-frame of the updated configuration is twice the sub-frame of the legacy configuration. The timing of the start sub-frames of the updated configured and the legacy configuration are the same: that is, the offset between the starting points of the whole updated configuration and the legacy configuration is zero. Specifically, if both sub-frames of the legacy configuration are U and U, then the updated configuration is U. If both sub-frames of the legacy configuration are D and D, then the updated configuration is D. The three special sub-frame designs are S0, S1 and S2, respectively. The design principles are that if the legacy configurations are D and S, then the updated configuration is S0; if the sub-frames in the legacy configuration are S and U, then the updated configuration is S1; if the sub-frames in the legacy configuration are U and D, then the updated configuration is S2. There are three special M sub-frames S0, S1, and S2 in this embodiment.

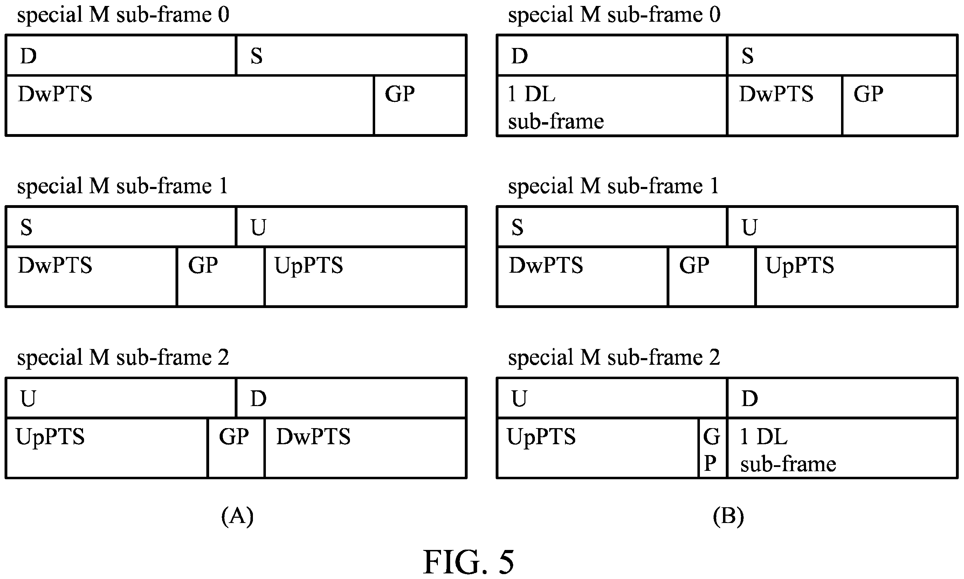

FIG. 5 shows a schematic diagram of a design of a special M sub-frame corresponding to the design option 1 according to one embodiment of the present disclosure. The special M sub-frame 0 is composed of one or more downlink symbols and the guard period (GP), wherein one or more downlink symbols form DwPTS as shown in (A). The special M sub-frame 0 may correspond to an legacy downlink sub-frame and an legacy special sub-frame, as shown in (B). The special M sub-frame 1 is composed of one or more downlink symbols, the GP, and one or more uplink symbols (i.e., DwPTS, GP and UpPTS). As shown in (A). The special M sub-frame 2 consists of one or more uplink symbols, a GP, and one or more downlink symbols (i.e., UpPTS, GP, and DwPTS), as shown in (A). The GP is existed because M sub-frame and the legacy sub-frame cannot perform the same uplink-to-downlink conversion. To avoid generating interference, there is a need to sacrifice some resources to act as the GP. If there is an advanced receiver, the GP in this special M sub-frame 2 may not exist, i.e., there are only some uplink symbols and some downlink symbols. In another embodiment, the special M sub-frame 2 corresponds to several uplink symbols and one legacy downlink sub-frame, and does not have the GP.

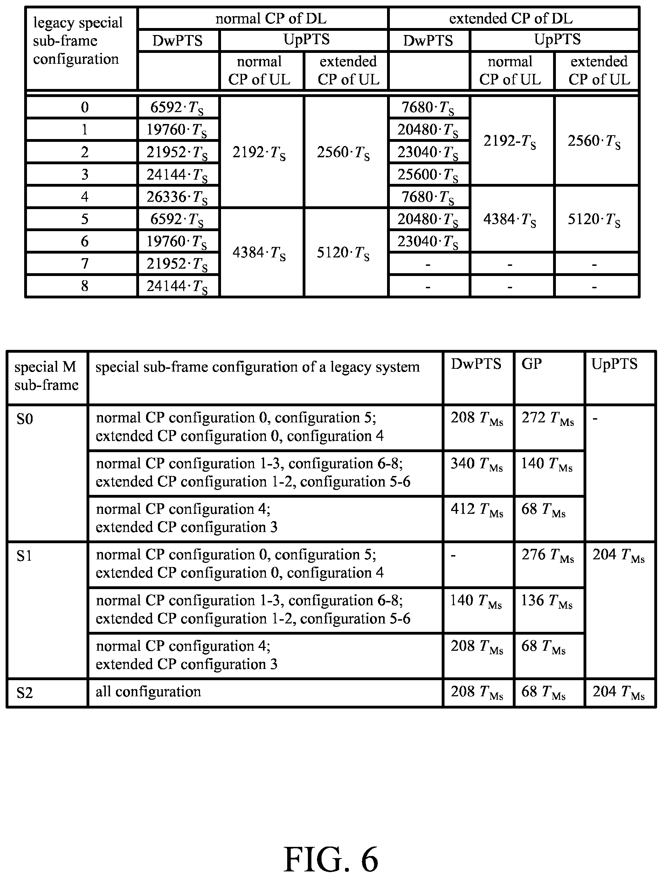

FIG. 6 is a correspondence diagram of a special sub-frame configuration of an legacy system and a newly designed M special sub-frame according to one embodiment of the present invention. Further examining the legacy sub-frame design, the special sub-frame has nine configurations. As shown in FIG. 6, DwPTS has 5 kinds of length for the normal CP length; for the extended CP length, the DwPTS has 4 kinds of length, and the corresponding UpPTS and the GP have 2 kinds of lengths. Considering that the symbol length and CP length correspond to a 3.75 kHz carrier spacing, the DwPTS length of the configuration 0 and configuration 5 in the normal CP length cannot carry one symbol length in the 3.75 kHz carrier spacing frame structure, and the DwPTS length of the configuration 4 can carry the length of three CP in 3.75kHz and one symbol. The other configurations (i.e., configurations 1, 2, 3, 6, 7, and 8) correspond to 2 downlink symbols. Similarly, for the extended CP length setting, the DwPTS of configuration 0 to configuration 6 correspond to 0, 2, 2, 3, 0, 2, and 2 symbols, respectively. FIG. 6 shows the mapping between the M special sub-frames and the legacy special sub-frame configurations, where T_{Ms} is the sampling frequency of the newly designed M frame structure.

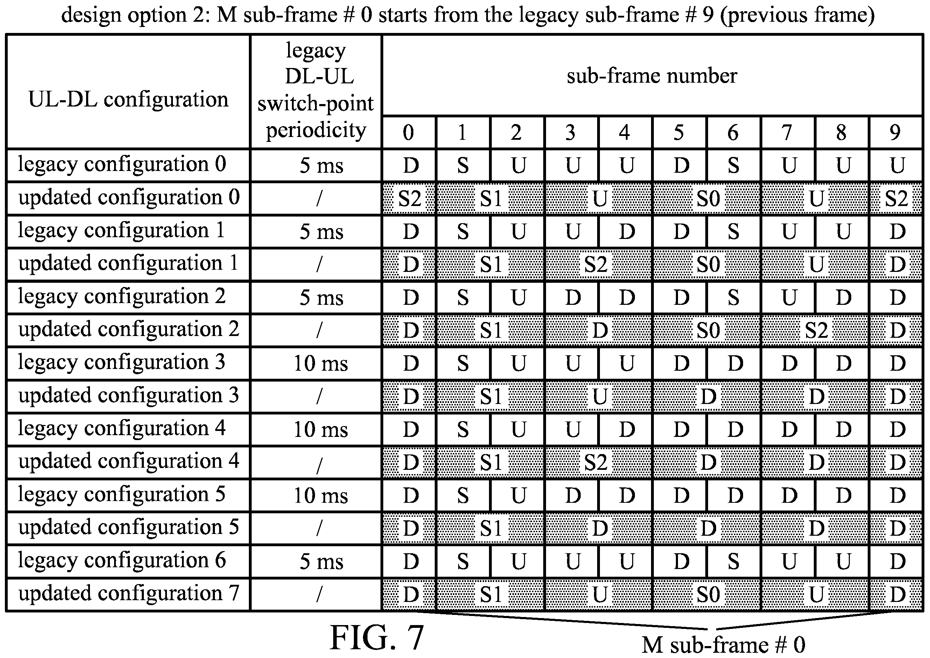

FIG. 7 is a schematic diagram of a design of a second sub-frame configuration applied to a TDD system according to another embodiment of the present invention. As shown in FIG. 7, in design option 2, one sub-frame in the updated configuration is twice the sub-frame in the legacy configuration. Unlike FIG. 4, in Design Option 2, the timing of the starting sub-frame of the whole updated configuration and the timing of the starting sub-frame of the legacy configuration are different: that is, the offset between the starting points of the whole updated configuration and the legacy configuration is not zero. Specifically, the M sub-frame # 0 starts from the legacy sub-frame # 9 of the legacy configuration, i.e., the M sub-frame # 0 corresponds to the legacy sub-frame # 9 and the legacy sub-frames # 0; the M sub-frame # 1 corresponds to the legacy sub-frame # 1 and legacy sub-frame # 2. Similarly, the M sub-frames # 2, # 3 and # 4 correspond to the legacy sub-frames # 3 and # 4, the sub-frames # 5 and # 6, and sub-frames # 7 and # 9, respectively. For an in-band deployment, the uplink and downlink directions of an M sub-frame are the same as the uplink and downlink directions of an elegacy system. Therefore, if the directions of the uplink and downlink of the legacy sub-frame corresponding to an M sub-frame are changed or there is a special sub-frame, then the M sub-frame should also be a special sub-frame. The schematic diagram of the special sub-frames shown in FIG. 5 is also applicable to the updated sub-frame configuration in FIG. 7. For example, the updated configuration 0 corresponding to legacy configuration 0 consists of S2 S1 U S0 U. Other configurations are shown in FIG. 7.

Compared to the updated configuration in FIG. 4, one advantage of the content in FIG. 7 is that the updated configuration adds the M sub-frame utilized for downlink (D), which reduces the number of special sub-frames, increases the sub-frame for the downlink transmission, and makes the more sub-frame configuration useful for an effective transmission.

In another embodiment, for an legacy configuration 1, the uplink and downlink configurations are DSUUDDSUUD, and the two special sub-frames may be skipped as the guard periods, and an uplink M sub-frame and a downlink M sub-frame are between the two special sub-frames. Therefore, there are 2 uplink M sub-frames and 2 downlink M sub-frames (i.e., D GP U D GP U, where GP is 1ms) in 10ms.

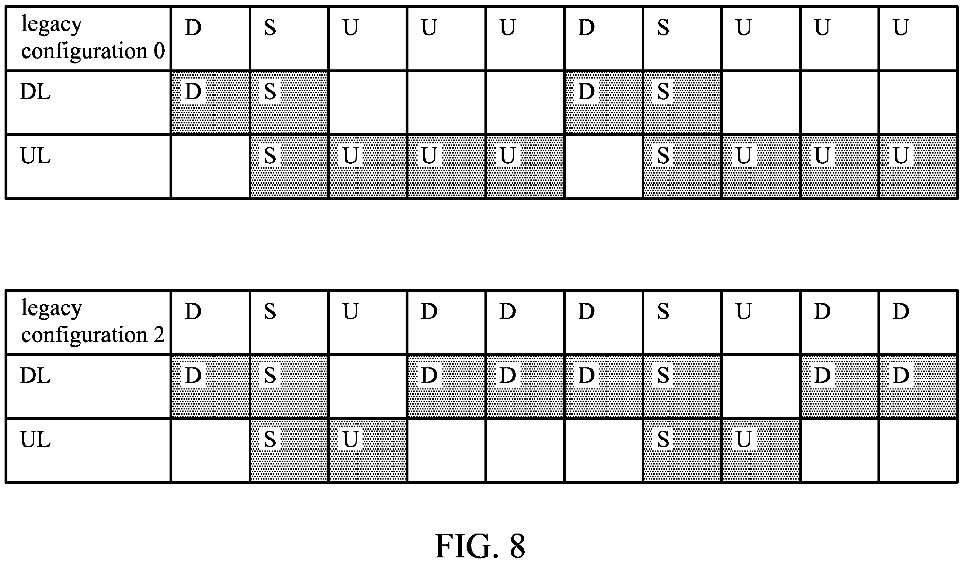

FIG. 8 is a schematic diagram of a design of a third sub-frame configuration applied to a TDD system according to another embodiment of the present invention. As shown in FIG. 8, in Design Option 3, one sub-frame in the updated configuration is twice the sub-frame in the legacy configuration. Unlike FIG. 4 and FIG. 7, in Design Option 3, the condition is not that there is an offset between the starting sub-frames of the whole updated configuration and the legacy configuration, but the updated sub-frame U or D in the updated configuration has a starting point that is different from the starting point of the sub-frame U or D in the legacy configuration, respectively (i.e., the offsets are different). Specifically, as shown in the upper half of FIG. 8, the DS sub-frame in the legacy configuration corresponds to the D sub-frame in the updated configuration, and both the sub-frames SU and UU in the legacy configuration correspond to the U sub-frame in the updated configuration, or the sub-frame SU and the sub-frame UU in the legacy configuration correspond to the S sub-frame and the U sub-frame in the updated configuration, respectively. In other words, the D sub-frame in the updated configuration and the D sub-frame in the legacy configuration have the same offset regarding the starting sub-frame, and the U sub-frame in the updated configuration has the same offset as the U sub-frame in the legacy configuration. The offsets in the above two updated configurations are different. That is, the U sub-frames and the D sub-frames in the updated configuration have different offsets, and the condition is not that the U sub-frames and the D sub-frames as a whole have an offset with the legacy configuration.

In one embodiment, DL and UL are respectively defined at the sub-frame level. For example, the legacy configuration 0 defines 6 M sub-frames, which are 2 downlink M sub-frames and 4 uplink M sub-frames, wherein the downlink M sub-frames are special sub-frames only having a part of symbols (i.e., only DwPTS is transmitted). Uplink M sub-frame # 0 and uplink sub-frame # 2 are special sub-frames, and only have partial symbols (i.e., only UpPTS are transmitted). In another embodiment, regarding the 6 M sub-frames defined by the legacy configuration 2, two downlink sub-frames (downlink M sub-frames # 0 and downlink M sub-frames # 2) are special sub-frames, and only partial symbols are transmitted (i.e., DwPTS sub-frame). Similarly, two uplink M sub-frames are also special sub-frames, and only UpPTS is transmitted. In another embodiment, to maintain the same number of logical sub-frames as the actual resource, the uplink and downlink M sub-frames are defined as the shifts of the original sub-frames. For example, the M sub-frames of the legacy configuration 0 are defined as the downlink M sub-frames, which are the M sub-frame #0 and M sub-frame #2 shifting right by 1ms (-1ms); and defined as the uplink M sub-frames, which are M sub-frame #0 shifting right by 1ms (-1ms), M sub-frame #1 shifting right by 1ms (-1ms), M sub-frame #3, and M sub-frame #4. In another embodiment, the M sub-frames of the legacy configuration 2 are defined as the downlink M sub-frames, which are the M sub-frames # 0, M sub-frames # 1-1ms, M sub-frames # 2-1ms, and M sub-frames # 5, and defined as the uplink M sub-frame, which are the M sub-frame # 0-1 ms and M sub-frame # 4.

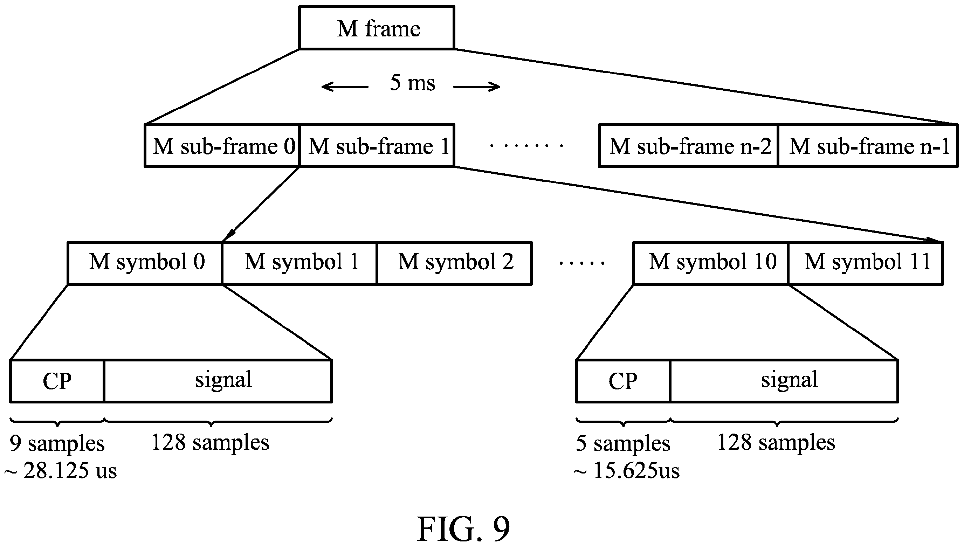

FIG. 9 is a schematic diagram of a second frame structure according to one embodiment of the present invention. The subcarrier spacing is 2.5 kHz using a 128-point Fast Fourier Transform (FFT) and 72 available carriers, i.e., occupying a 180 kHz bandwidth, and the sampling frequency is T_{Ms} = 128 x 2.5 kHz = 320 kHz. As shown in FIG. 9, an M sub-frame (M-sub-frame) is 5ms and includes 12 symbols. That is, the length of the M sub-frame in the updated configuration is five times the length of the sub-frame in the legacy configuration. In one design, a cyclic prefix (CP) length of the first M symbol has nine samples, which is 28.125us. The CP length of the last 11 M symbols is five samples (i.e., about 15.625us). In order to have the same wireless frame length as the other system, (such as 10ms), in the disclosed embodiment, an updated frame (herein as M frame) is represented as the frame applied to MTC UE or IoT UE. Furthermore, the M frame consists of 2 M sub-frames, or consists of an M frame which further shift to right by n M sub-frames to obtain the longer wireless frame. For the purpose of making the length of the wireless frame be integral times more than 10ms, n should be an even number. In another embodiment, a CP length of the first 4 M symbols have is 6 samples (i.e., about 18.75us), and a CP length for the remaining 8 M symbols is 5 samples (i.e., about 15.625us). In addition, FIG. 9 also shows a comparison between the newly designed frame structure and the legacy LTE system frame structure. One M sub-frame is 5ms and contains 12 symbols corresponding to 5 LTE sub-frames, wherein each sub-frame for the normal CP includes 14 OFDM symbols, and each sub-frame for the extended CP includes 12 OFDM symbols. In other words, since the new frame structure design uses 5ms as a unit, a new design needs to be applied to the TDD system.

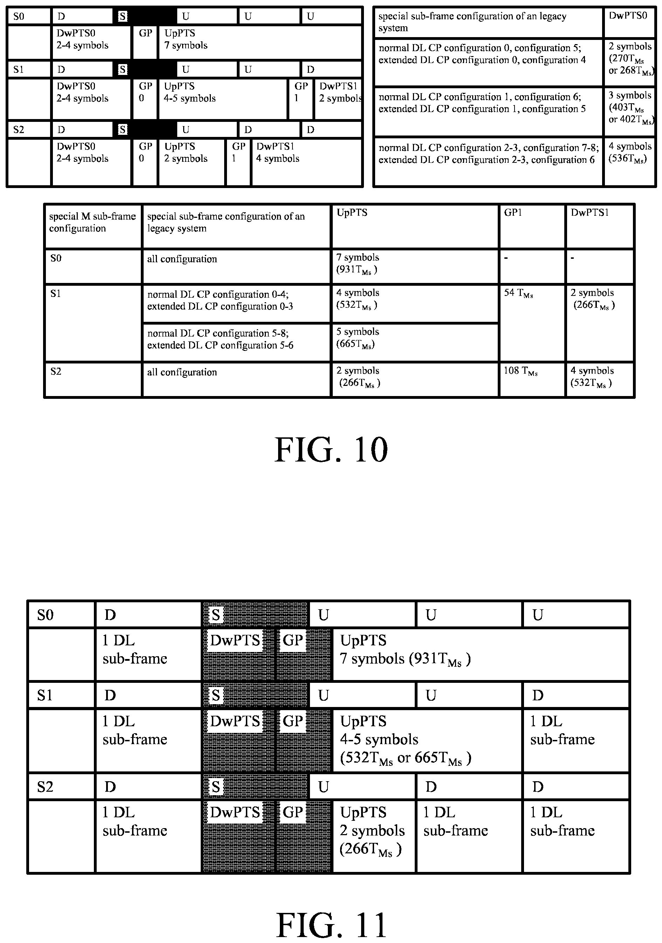

FIG. 10 is a schematic diagram illustrating the design of a special M sub-frame according to one embodiment of the present disclosure. Referring to FIG. 9, one sub-frame in the updated configuration occupies 5ms, corresponding to 5 sub-frames in 5ms of the legacy configuration. Therefore, there are three configurations in the legacy configuration in 5ms, which are DSUUU, DSUUD and DSUDD. For these three legacy configurations, FIG. 10 shows the design of the three special M sub-frames. S0 is a first special M sub-frame consisting of the DwPTS0, GP0, and UpPTS. S1 is a second special M sub-frame consisting of the DwPTS0, GP0, UpPTS, GP1 and DwPTS1 with 2 symbols. S2 is a third special M sub-frame consisting of DwPTS0, GP0, UpPTS, GP1 and DwPTS1 with 4 symbols. S1 and S2 may be regarded as one type of the special M sub-frame, but the numbers of symbols in the UpPTS and the second DwPTS1 are different. The GP1 in the second and third special M sub-frames is used to fill in the gap between DwPTS1 and the downlink sub-frame of the legacy system. GP1 may be greater than the number of the sampling point given in FIG. 10. When the number of the sampling point of GP1 is greater than the number of the sampling point given in Figure 10, which means that UpPTS being transmitted early. Correspondingly, the number of sampling points of the GP0 is reduced. The number of sampling points of GP0 is adjusted according to the number of DwPTS, UpPTS, and GP1 so that the overall special M sub-frame is 5ms.

Corresponding to both the legacy uplink and downlink configurations, the new TDD configuration 2 is SS or SD. The SS corresponds to configurations 0, 1, 2, and 6 of the legacy configurations, and the SD corresponds to configurations 3, 4, and 5 of the legacy configurations. More specifically, the legacy configuration 0 corresponds to S0 S0, and the legacy configuration 1 corresponds to S1 S1; the legacy configuration 2 corresponds to S2 S2; the legacy configuration 6 corresponds to S0 S1; and the legacy configurations 3, 4, and 5 correspond to S0D, S1D, and S2D.

For NB-IoT or other systems, different waveforms may be used for the uplink and downlink, or different parameters may be used, such as a subcarrier spacing or carrier spacing. For example, the downlink uses subcarrier spacing of 15 kHz, and the downlink uses small subcarrier spacing (e.g., 3.75 kHz or 2.5 kHz). In such cases, the frame structures of the uplink and downlink may be different. For example, for the downlink, one M sub-frame may consist of a number of sub-frames, while for the uplink, there is no concept of sub-frames, and there is an M sub-frame directly consists of a number of symbols. In one embodiment, the downlink may adopt the legacy configuration and the uplink may adopt the new configuration.

FIG. 11 is a schematic diagram showing the design of the third set of special M sub-frames according to one embodiment of the present disclosure. In FIG. 11, a downlink M sub-frame is defined as at least one legacy downlink sub-frame and one legacy special sub-frame. For the uplink, only the definition of M sub-frames is used. If there exists only a plurality of uplink symbols in a special M sub-frame, then they are defined as the UpPTS of the special M sub-frame. As shown in FIG. 11, a special M sub-frame S0 corresponding to the legacy configuration DSUUU is composed of one downlink sub-frame, one DwPTS, one GP, and one UpPTS. The special M sub-frame S1 corresponding to the legacy configuration DSUUD consists of one downlink sub-frame, one DwPTS, one GP, one UpPTS, and one downlink sub-frame. The special M sub-frame S1 corresponding to the legacy configuration DSUDD is composed of at one downlink sub-frame, one DwPTS, one GP, one UpPTS, and two downlink sub-frames. The length of the UpPTS is the same as the UpPTS shown in FIG. 10. The DwPTS is the same as the legacy system, such as a configuration of DwPTS corresponding to the legacy special sub-frame configuration shown in FIG. 6.

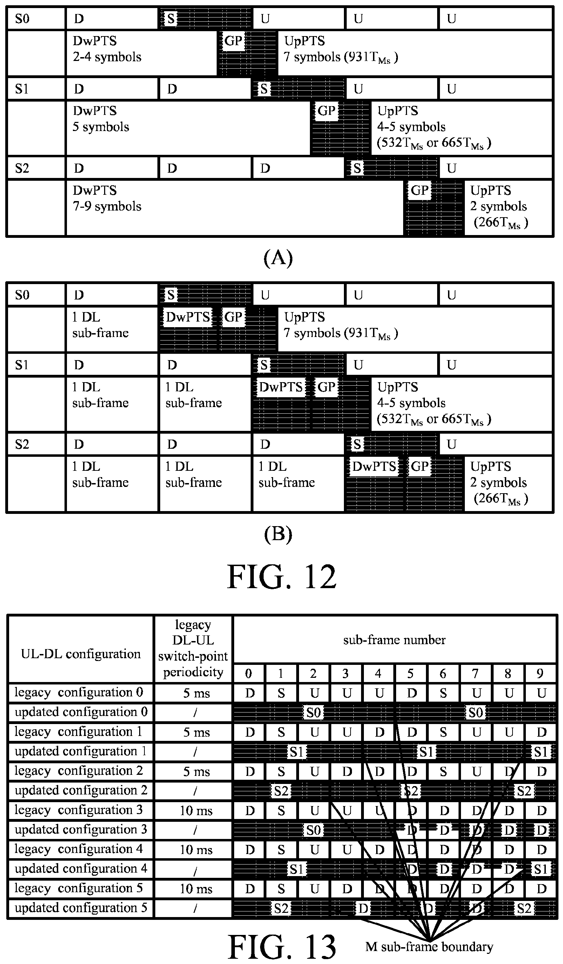

FIG. 12 shows a schematic diagram of a design of a fourth set of special M sub-frames according to one embodiment of the present disclosure. As shown in part (A), the special M sub-frames in this set are respectively composed of one DwPTS, one GP and one UpPTS. The different configurations correspond to the number of symbols in DwPTS and UpPTS. For example, there are 2-4 symbols in the DwPTS of the special M sub-frame S0, which respectively correspond to the configuration in DwPTS0 in FIG. 10. There are 5 symbols in the DwPTS in the special M sub-frame S1. There are 7-9 symbols in the DwPTS in the special M sub-frame S2. There are 7 downlink M symbols in DwPTS of the special M sub-frame S2 corresponding to the legacy special sub-frame configuration normal downlink CP configurations 0 and 5 and the legacy configuration extended downlink CP configurations 0 and 4. There are 8 downlink M symbols in the special M sub-frame S2 corresponding to the legacy special sub-frame configuration normal downlink CP configurations 1, 2, 6, and 7 and the extended downlink CP configurations 1, 2, 5, and 6, and there are 9 downlink M symbols in the special M sub-frame S2 corresponding to the remaining configuration. The UpPTS respectively corresponds to the UpPTS configuration shown in FIG. 10.

In another embodiment, as shown in part (B) of FIG. 12, the special M sub-frames respectively consist of a plurality of the legacy downlink sub-frame (one in S0, two in S1, and three in S2), one legacy DwPTS, one GP, and one UpPTS. The legacy DwPTS configuration can be configured as the DwPTS of the legacy special sub-frame configuration shown in Figure 6. The UpPTS configuration may be the configuration of the UpPTS shown in Figure 10.

FIG. 13 illustrates a relationship between the design of the special M sub-frame in FIG. 9 and the legacy TDD downlink configuration according to one embodiment of the present disclosure. The embodiment is configured as the configurations of the uplink and downlink of the legacy TDD after having shifted. The starting points of the 0th sub-frame of the updated configuration and the legacy configurations of the configurations 0 and 3 are the same: that is, the starting point of the M sub-frame #0 is the legacy sub-frame #0. There is one sub-frame (2ms) shift between the legacy configurations of the configurations 1, 4 and the starting point of the 0th sub-frame of the updated configuration, and the starting point of the M sub-frame #0 is the legacy sub-frame #9. There are two sub-frames (2ms) shift between the legacy configurations of the configurations 2, 5 and the starting point of the 0th sub-frame of the updated configuration: that is, the starting point of the M sub-frame #0 is the legacy sub-frame #8. Since the uplink and downlink configuration corresponding to the legacy uplink and downlink configuration 6 is DSUUUDSUUD, it cannot be represented by the special sub-frames shown in FIG. 12: that is, the special sub-frames shown in FIG. 12 cannot support the legacy configuration 6.

In another embodiment, different UL / DL configurations may correspond to different design criteria. For example, one of the above-described designs for the TDD system may be selected for different UL / DL configurations, and then obtains more opportunities for uplink and downlink transmission as much as possible and improves system throughput. Furthermore, the system information may be configured through the information bits in order to select the design scheme. For example, the shift may be used in different UL / DL configurations, and one bit in the SIB may be utilized to represent whether the shift has been adopted or not. For example, in some configurations, the special sub-frame may be processed further. In a novel embodiment, for UL-DL configuration 1, a shift may be added, which skips a particular sub-frame (e.g., 1ms gap). In another novel embodiment (e.g., for the UL-DL configuration 0 and the UL-DL configuration 2), the special sub-fame may be viewed as 1ms, and may be combined with the previous sub-frame or the subsequent sub-frame to be one M sub-frame. While the above two approaches may be predefined in, for example, the technical specifications based on the corresponding UL-DL configuration. For example, the further optimization of the above configuration can be written to the technical specification, predefined in the system, or separately configured in the SIB only. For the NB-IoT UE, the above configuration may be transparent: that is, for different starting points of frames, a shift such as 1ms is used for the legacy LTE UE. The same principle may apply to the transmission of the MIB and synchronization signals, such as MBSFN. At the UE side, if an indication, which is transmitted by the network side or the base station, of a generated new frame structure is detected, then the transmission can be performed by the frame structure. If the indication of the frame structure indicates its change (e.g. by a bit or an indication signal), the UE side may query or calculate the frame structure for itself according to the indication on the system side (such as defined in the technical specification, hard-written, hard-coded, or a predefined table), and then it may adopt the frame structure described in the above embodiments. Embodiments of the above-described methods and frame structures may be applicable to MTC, NB-IoT, or the UE limited by the new frame structure described above, and the specific behavior will not be described herein.

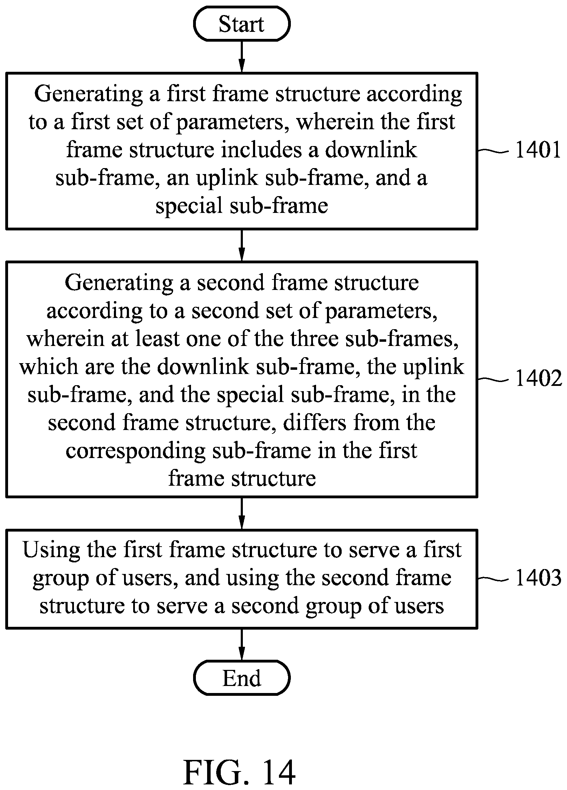

FIG. 14 is a flow diagram illustrating the network side that generates the updated frame structure which is applied to different UE according to one embodiment of the present disclosure. In step 1401, at the system side, such as a base station, or a core network generates a first frame structure according to a first set of parameters, wherein the first frame structure includes downlink sub-frame, uplink sub-frame, and special sub-frame. Then in step 1402, a second frame structure is generated according to a second set of parameters, wherein at least one of the three sub-frames, which are the downlink sub-frame, the uplink sub-frame, and the special sub-frame, in the second frame structure, differs from the corresponding sub-frame in the first frame structure. Furthermore, in step 1403, the first frame structure is used to serve a first group of users, and the second frame structure serves a second group of users. In one embodiment, the sub-frame length in the second frame structure is an integer multiple of the sub-frame length in the first frame structure in order to align the starting points of the receiving/transmitting signals of the different users as much as possible. Moreover, due to limited spectrum resources, the base station can simultaneously serve different users with the first frame structure and the second frame structure in different frequency bands.

In one embodiment, the base station and the user may generate one or more frame structures according to one or more of the following parameters. The parameters are subcarrier spacing, symbol length, cyclic prefix length, sampling rate, and FFT point. As per the frame structure shown in Figure 2, corresponding to the frame structure, the subcarrier spacing is 15 kHz; the symbol length is 6.67us; the sampling rate is 30.72 MHz; the CP length is 144 sampling points (the first symbol has a CP length of 160 sampling points); another CP length is 512 sampling points; and the FFT points are 2048. The length of one sub-frame is 1ms, and the sub-frame consists of 14 or 12 symbols. One slot is 0.5ms and consists of 7 or 6 symbols. Two slots may be a sub-frame. Five sub-frames may be a half-frame. 10 sub-frames may be a system frame which is 10ms. Note that if the sampling rate of the system or the system bandwidth is reduced, the number of sampling points of the corresponding CP and the number of FFT point are reduced proportionally, but the length of the symbol and the length of the sub-frame are not changed. In another embodiment, as per the frame structure shown in FIG. 3 (corresponding to the frame structure), the subcarrier spacing is 3.75 kHz; the symbol length is 266.7 us; the sampling rate is 240 kHz, the FFT points are 64; one CP length is that the first symbol length is 8 sampling points (33.3us), and the remaining symbols are 4 sampling points (16.7us); the other CP length is that the first 4 symbols are 5 sampling points, and the remaining symbols are 4 sampling points. In another embodiment, as per the frame structure shown in FIG. 9 (corresponding to the frame structure), the subcarrier spacing is 2.5 kHz; the symbol length is 400 us; the sampling rate is 320 kHz; the FFT points are 128; one CP length is that the first symbol length is 9 sampling points (28.125us), and the remaining symbols are 5 sampling points (15.625us); the other CP length is that the first 4 symbols are 6 sampling points (18.75us), and the remaining symbols are 5 sampling points (15.625us).

In one embodiment, the second set of parameters further includes the uplink parameter and downlink parameter: that is, the uplink and downlink use different parameters which include one or more parameters of the subcarrier spacing, symbol length, cyclic prefix length, sampling rate, and FFT point. Furthermore, for a user, the uplink and downlink may use different parameters to define the frame structure. This definition is not limited to TDD system, and may be applied to FDD system. As shown in FIG. 11 and FIG. 12 (A), the downlink adopts a frame structure corresponding to the subcarrier spacing which is 15 kHz, and the uplink uses the different subcarrier spacing to correspond to the different frame structure, such as a subcarrier spacing which is 3.75 kHz or 2.5 kHz. The user, the base station, or the core network generates a second frame structure according to the second set of parameters which further comprises: generating the uplink sub-frame based on uplink parameters, generating the downlink sub-frame based on downlink parameters, and generating the special sub-frame based on uplink and downlink parameters. The uplink and downlink use different parameters to generate the corresponding sub-frame. In order to avoid generating interference with the user adopting the first frame structure, some special M sub-frames need the special sub-frame including at least two of the downlink symbol, uplink symbol, and guard period. As shown in Fig. 10, the special M sub-frame configuration 1 and the special M sub-frame configuration 2 have GP0 and GP1, wherein the GP1 makes the directions of the uplink and downlink in the second frame structure coincide with the directions of the uplink and downlink in the first frame structure.

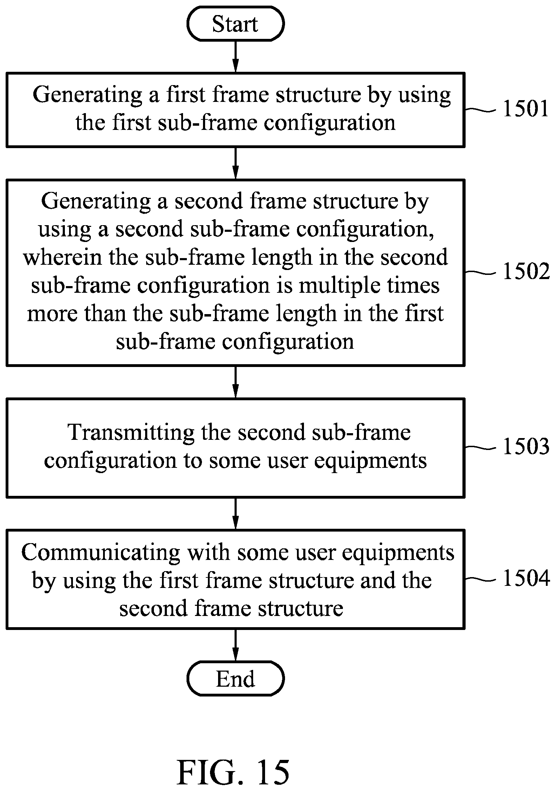

FIG. 15 is a flow diagram illustrating the method of receiving and transmitting a signal at the base station side according to one embodiment of the present disclosure. A method for receiving and transmitting a signal, wherein the base station supports a first sub-frame configuration and a second sub-frame configuration. The method includes: Step 1501, the base station generates a first frame structure by using the first sub-frame configuration in a wireless network. In step 1502, the base station generates a second frame structure by using a second sub-frame configuration, wherein the sub-frame length in the second sub-frame configuration is multiple times more than the sub-frame length in the first sub-frame configuration. In step 1503, the base station transmits the second sub-frame configuration to multiple UEs. In step 1504, the base station uses the first frame structure and the second frame structure to communicate with multiple UEs. If the base station supports the first sub-frame configuration and the second sub-frame configuration, then the method performs steps 1501 to 1504 described above. For a base station that only supports the second sub-frame configuration, steps 1502-1504 are performed, and step 1504 is further modified to communicate with multiple users by using the second frame structure.

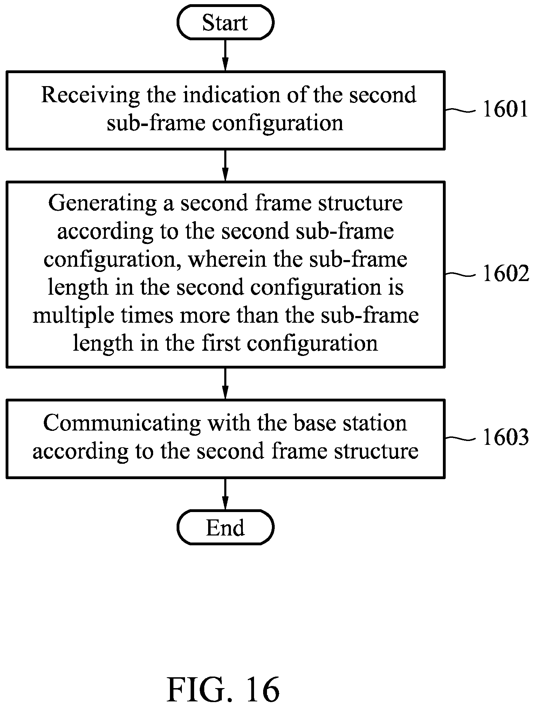

FIG. 16 is another flow diagram illustrating the method of receiving and transmitting a signal at the UE side according to one embodiment of the present disclosure. In this method, the user equipment supports the updated sub-frame configuration, and the updated sub-frame configuration can be identified. The method includes step 1601, in which the UE receives the indication of the second sub-frame configuration. In step 1602, the UE generates a second frame structure according to the second sub-frame configuration. In step 1603, the communication with the base station is conducted according to the second frame structure.

In step 1602, the indication of the second sub-frame configuration may be implemented as a simplified message (e.g., a few bits) which supports or does not support the second sub-frame configuration (for example). The second configuration may include at least one of the subcarrier spacing, symbol length, cyclic prefix length, sampling rate, FFT point, and offset.

In one embodiment, the first uplink and downlink configuration may be the uplink or downlink configuration shown in FIG. 2, or the second uplink and downlink configuration may be the legacy UL-DL configuration shown in FIG. 4, FIG. 7, FIG. 8, or FIG. 13. In another embodiment, the second uplink and downlink configuration may be the updated configuration as shown in FIG. 4, FIG. 7, FIG. 8, or FIG. 13.

In one embodiment, the mapping relationship between the first uplink and downlink configuration and the second uplink and downlink configuration is predefined. For example, the mapping relationship between the legacy configuration and the updated configuration in FIG. 4, FIG. 7, FIG. 8, or FIG. 13. Similarly, the mapping relationship between the first special sub-frame configuration and the second special sub-frame configuration is predefined, such as the mapping relationship between the legacy special sub-frame configuration and the M special sub-frame configuration shown in FIG. 5, FIG. 6, FIG. 10, FIG. 11, and FIG. 12. In another embodiment, the mapping relationship between the first uplink and downlink configuration and the second uplink and downlink configuration is obtained from the mapping-relation-indication information. The base station may deploy the user through system information or other RRC information, or an indication of the physical layer, such as the information of the downlink control information (DCI). In another embodiment, the user obtains the first and second uplink and downlink configurations through a combination of the predefinition and indicated information. That is, the user equipment obtains the indication of the second sub-frame configuration and the indication of the second sub-frame configuration through the combination of the predefinition and the indication information. Similarly, the mapping relationship between the first special sub-frame configuration and the second special sub-frame configuration may also be obtained by the indication information or the combination of the predefined relationship and indication information.

In another embodiment, the mapping relationship between the first special sub-frame configuration and the special sub-frame configuration is obtained according to at least two frame structures of the first uplink and downlink configuration, the first special sub-frame configuration, and predefinition.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A data-transmission method, comprising:
utilizing a first sub-frame configuration to generate a first frame structure by a base station in a wireless communication network;
utilizing a second sub-frame configuration to generate a second frame structure, wherein a length of each sub-frame in the second sub-frame configuration is several times a length of a sub-frame in the first sub-frame configuration;
transmitting an indication of the second sub-frame configuration to multiple user equipments(UEs); and
transmitting and receiving a signal for the UEs by using the first sub-frame structure and the second frame structure.

2. The method as claimed in Claim 1, wherein utilizing the second sub-frame configuration to generate the second frame structure further comprises:
utilizing an uplink parameter to generate an uplink sub-frame, utilizing a downlink parameter to generate a downlink sub-frame, and utilizing the uplink parameter and the downlink parameter to generate a special sub-frame.

3. The method as claimed in Claim 2, wherein the special sub-frame comprises at least two of a downlink symbol, an uplink symbol, and a guard period.

4. The method as claimed in Claim 1, wherein the indicator of the second sub-frame configuration comprises at least one of a subcarrier spacing, a symbol length, a cyclic prefix length, a sampling rate, a number of FFT points, and an offset.

5. The method as claimed in Claim 4, further comprising:
determining an offset between starting positions of the second frame structure and the first frame structure, and generating the second frame structure according to the offset.

6. The method as claimed in Claim 5, wherein the offset between a starting point of a downlink sub-frame, an uplink sub-frame, and a special sub-frame as a whole in the second sub-frame configuration and a starting point of the first sub-frame configuration is zero.

7. The method as claimed in Claim 5, wherein the offset between a starting point of a downlink sub-frame, an uplink sub-frame, and a special sub-frame as a whole in the second sub-frame configuration and a starting point of the first sub-frame configuration is not zero.

8. The method as claimed in Claim 5, wherein starting points of a downlink sub-frame and an uplink sub-frame in the second sub-frame configuration have different offsets with respect to starting points of a downlink sub-frame and an uplink sub-frame in the first sub-frame configuration.

9. The method as claimed in Claim 1, wherein the length of the sub-frame in the second sub-frame configuration equals the length of the sub-frame in the first sub-frame configuration multiplied by a factor, and the factor is two, five, or a power of two.

10. A data-transmission method, comprising:
in a wireless communication network, receiving an induction of a second sub-frame configuration by a user equipment(UE), wherein a length of each sub-frame in the second sub-frame configuration is several times a length of a sub-frame in a first sub-frame configuration;
utilizing the second sub-frame configuration to generate second frame structures which are different from a sub-frame in the first sub-frame configuration; and
transmitting and receiving a signal with a base station by using the second frame structures.

11. The method as claimed in Claim 10, wherein an uplink and a downlink between the UE and the base station use different second frame structures.

12. The method as claimed in Claim 10, wherein utilizing the second sub-frame configuration to generate the second frame structures further comprises:
utilizing an uplink parameter to generate an uplink sub-frame, utilizing a downlink parameter to generate a downlink sub-frame, and utilizing the uplink parameter and the downlink parameter to generate a special sub-frame.

13. The method as claimed in Claim 12, wherein the special sub-frame comprises at least two of a downlink symbol, an uplink symbol, and a guard period.

14. The method as claimed in Claim 10, wherein the second sub-frame configuration comprises at least one of a subcarrier spacing, a symbol length, a cyclic prefix length, a sampling rate, a number of FFT points, and an offset.

15. The method as claimed in Claim 14, further comprising:
determining an offset between starting positions of the second sub-frame configuration and the first sub-frame configuration, and generating the second frame structure according to the offset.

16. The method as claimed in Claim 15, wherein an offset between a starting point of a downlink sub-frame, an uplink sub-frame, and a special sub-frame as a whole in the second sub-frame configuration and a starting point of the first sub-frame configuration is zero.

17. The method as claimed in Claim 15, wherein an offset between a starting point of a downlink sub-frame, an uplink sub-frame, and a special sub-frame as a whole in the second sub-frame configuration and a starting point of the first sub-frame configuration is the second offset which is not zero.

18. The method as claimed in Claim 15, wherein starting points of a downlink sub-frame and an uplink sub-frame in the second sub-frame configuration have different offsets with respect to starting points of a downlink sub-frame and an uplink sub-frame in the first sub-frame configuration.

19. The method as claimed in Claim 10, wherein the length of the sub-frame in the second sub-frame configuration equals the length of the sub-frame in the first sub-frame configuration multiplied by a factor, and the factor is two, five, or a power of two.
